# EUROPEAN PATENT SPECIFICATION

(11) **EP 3 086 923 B1**
(45) Date of publication and mention of the grant of the patent: **13.11.2019**
(21) Application number: 14827451.7
(22) Date of filing: 24.12.2014
(51) Int. Cl.: B29C 70/46, B29C 70/08, B29B 11/16, B29C 70/22

(54) **IMPROVEMENTS IN OR RELATING TO LAMINATES**
VERBESSERUNGEN AN ODER IM ZUSAMMENHANG MIT LAMINATEN
PERFECTIONNEMENTS APPORTÉS À DES STRATIFIÉS OU S'Y RAPPORTANT

(30) Priority: 24.12.2013 GB 201323007
(43) Date of publication of application: 02.11.2016
(73) Proprietor: Hexcel Composites Limited, Duxford, Cambridgeshire CB22 4QB (GB)
(72) Inventor: STORER, Alistair, Cambridge Cambridgeshire CB1 3NX (GB); RHODES, Michael, Duxford Cambridgeshire CB22 4QD (GB); WHITER, Mark, Duxford Cambridgeshire CB22 4QD (GB)
(74) Representative: Eddowes, Simon
(86) International application number: PCT/EP2014/079313
(87) International publication number: WO 2015/097286

(56) References cited:
- EP-A1- 2 607 411
- WO-A1-2013/110111
- WO-A2-2013/096377
- US-A1- 2008 260 954

## Description

### INTRODUCTION

The present invention relates to fibre reinforced materials comprising fibres and thermosetting resins and in particular to materials that are produced by stacking layers comprising reinforcing fibre and a curable resin and subsequently curing the resin within the stack to provide an integral laminar structure of several fibre reinforcing layers encapsulated by the cured resin. Such laminar structures are strong and light-weight and are well known and find many uses in industrial applications such as automotive and marine applications and also in wind turbine structures such as the shells used for turbine blade production, the spars and the root ends of the spars. They are also used for sporting goods such as for skis, surf boards, and the like.

### BACKGROUND

The fibrous material employed may be tows of woven or non-woven fabrics and may be chosen according to the final use and desired properties of the composite part. This invention is particularly concerned with systems in which the reinforcing fibre consists of unidirectional multifilament tows such as substantially parallel tows, each tow comprising a multitude of individual substantially parallel filaments. Examples of fibrous materials that may be used include glass fibre, carbon fibre and Aramid. Similarly the thermosetting resin that is used may depend upon the use to which the laminate is to be put and the properties required. Examples of suitable thermosetting resins include polyurethane resins and epoxy resins. This invention is particularly concerned with systems employing thermosetting liquid epoxy resins.

Moulding materials comprising mixtures of fibrous material and thermosetting resins are sometimes known as prepregs and can be prepared by impregnating the fibrous material with the resin in liquid form. Some thermoset resins are liquid at ambient temperature and impregnation can therefore be achieved at ambient temperature. However, usually it is preferred to heat the resin to reduce its viscosity to aid impregnation.

The impregnation of the fibrous material may be achieved by depositing the resin on a backing layer for example, by passing the backing layer through a bath of the liquid resin and coating the resin on the backing layer by means of a doctor blade. The surface of the backing layer carrying the resin may then be brought into contact with the fibrous material and be pressed into the fibrous layer to achieve impregnation of the fibrous layer with the resin. Alternatively a moving film of resin may be brought into contact with a moving backing layer and then brought into contact with a fibrous layer in a pair of heated nip rollers. In many applications it is preferred to employ two layers of resin one on each side of the fibrous layer to produce a sandwich structure to which pressure is applied to cause the resin to flow into the fibrous layer to fully impregnate the layer to form a conventional prepreg, so that the layer largely contains fibers which are fully embedded in resin and little air remains in the layer. These prepregs have a resin content in the prepreg ranging from 25 to 45% by weight of the prepreg. In highly stressed components the void content of laminates formed from prepreg moulding materials is significant for the performance, as each void is a potential point of defect which decreases the mechanical properties. For this reason, customers of prepregs require prepregs which produce low, reproducible void content, but which at the same time have good handling properties.

Air can be trapped during the manufacture of the prepreg moulding material and during the lay up in the mould of multiple prepreg layers in a multilayer stack which forms the moulding. The impregnation of the fibrous material with the liquid resin as previously described can introduce some air into the prepreg assembly of the fibrous layer and the resin during impregnation of the fibrous reinforcement unless this process is very carefully controlled.

Air also tends to be captured between layers of prepregs due to their tacky surfaces. It has been customary to process the lay-up of prepregs under vacuum (usually in a vacuum bag or autoclave) to remove air from laminate stacks. Generally, it has not been possible to completely remove trapped interlaminar air and intralaminar air (air within a single layer of prepreg) from conventional prepregs and to manufacture laminates which have uniform properties across the length and breadth of the laminate.

Air which is trapped during the manufacture of the prepreg assembly is difficult to remove once the prepreg is laid up to form the moulding and the moulding is processed whereby the thermosetting resin begins to cure. The presence of such air in the prepreg invariably results in voids in the final laminate. It is therefore important to minimise the formation of air bubbles within the resin fibre assembly during and after impregnation and prior to the onset of curing of the resin.

Prepregs used in wind energy and other industrial applications are not typically cured in an autoclave. As a result the final cured part exhibits voids which reduce mechanical properties. Furthermore, prepregs used in these applications, in particular in wind energy, tend to be low cost prepregs. As a result, prepregs with fewer added materials or process steps are favoured to maintain a low cost. Preferably no additional apparatus is required for the production of such a prepreg.

Wind energy turbine blades are being designed in ever increasing sizes. This means that composite materials with improved mechanical properties are needed. Therefore, a composite material suitable for use in wind turbine blades having suitable porosity and toughness is required when cured out of autoclave.

One method for improving the venting of prepregs is exemplified by EP 1 595 689 which discloses a prepreg assembly comprising a lightweight woven scrim that is adhered to the outer surface of a prepreg. The scrim is impressed onto the prepreg to such a degree that less than half of the circumference of the strands of the scrim are coated by the prepreg resin. The disadvantage of this material is that it does not sufficiently reduce the porosity of the cured prepreg.

PCT Publication WO 00/27632 is concerned with avoiding air becoming trapped either within a layer of moulding material (a prepreg) or between adjacent layers particularly when heavy weight glass fibre such as 1200 g/m² unidirectional tape is used as the fibrous reinforcement. The solution provided by WO 00/27632 is to provide a multi-layered moulding material which may be a prepreg comprising a layer of resin material conjoined to at least one surface of a fibrous layer. According to one embodiment the fibrous layer may be partially impregnated by the resin layer. This material has the disadvantage that it is inherently unstable. If the material is stored for any length of time prior to its lay up in the mould, the liquid resin migrates into the fibrous material which in turn results in loss of the air removal properties of the material as dry areas of the fibrous material are saturated with resin. Also, we have discovered that for large laminate stacks, typically of over 20 individual prepreg plies, this material is less effective in the removal of inter- and intralaminar air, and does not provide an appreciable improvement of toughness.

WO2013107829 A1 discloses a prepreg comprising a porous powder coating on the surface of a prepreg to introduce venting pathways. Such an approach requires additional processing stages and equipment and increases the cost of producing the material.

EP1317501 B1 discloses a prepreg toughened with the addition of soluble thermoplastic element. This material has the problem of a high void fraction in laminates formed from multiple layers of the prepreg.

US20080260954 A1 discloses a laminate structure comprising a non-woven thermoplastic resin in combination with a curable moulding material comprising a fibrous reinforcement material and a thermoset resin material.

The present invention aims to obviate or at least mitigate the above described problems and/or to provide improvements generally.

### SUMMARY OF THE INVENTION

According to the invention, there is provided a use as defined in any one of the accompanying claims.

The present invention is concerned with a moulding material or structure which can be moulded to produce laminates with a reduced number of voids and improved toughening.

In an aspect of the present disclosure there is provided a moulding material or structure comprising a layer of fibrous reinforcement, a curable liquid resin and a thermoplastic fibrous veil adhered to a surface of the moulding material.

Scrims and similar woven fabrics are currently used to improve venting of prepregs. These are adhered to the prepreg surface and introduce venting channels along the fibres of the scrim. For this reason fabrics having linearly arranged threads are preferred because they provide a shorter air venting path from the centre of the laminate to the external edge. A woven fabric is also preferred because the crimps in the fabric provide gaps for improved venting. Additionally, traditionally it is believed that an unimpregnated scrim or fabric made from a substance which remains as a separate phase throughout the cure cycle is required, so that venting pathways are maintained through to cure.

Surprisingly, we have found that a thermoplastic resin which has a melting point below the gel point of the thermoset resin, can provide sufficient venting to achieve a cured laminate with a lower porosity than existing moulding materials. Furthermore, such a thermoplastic resin can also provide an improvement in the toughness of the cured laminate. The thermoplastic resin is solid at room temperature (21 °C).

In a preferred embodiment, the thermoplastic resin is in the form of a veil or scrim.

Typically non-woven fabrics lack the crimps of a woven fabric and normally non-woven fabrics comprise fibres in a random or non-linear arrangement. Thus it is surprising that such a structure when combined with a prepreg achieves a cured laminate with lower porosity than with a scrim or woven fabric.

### Thermoplastic resin

The thermoplastic resin may comprise a phenoxy resin. In a preferred embodiment the thermoplastic resin comprises a fibrous veil. The veil may comprise a non-woven veil.

Preferably the thermoplastic veil has an areal weight of from 3 to 25 g/m², preferably from 17 to 24 g/m². The thermoplastic veil may comprise a phenoxy resin or bisphenol-A-based polyhydroxyether resin or polyhydroxyether resin with an average molecular weight in the range of from 25,000 to 40,000, preferably from 34,000 to 39,000. The veil may comprise a resin having a melting point in the range of from 120 to 140°C.

In an alternative embodiment the non-woven layer may comprise discrete fibres randomly distributed on the surface of a prepreg. Prefereably these are chopped fibres cut to a length of from X to X mm.

In a further embodiment the veil is adhered to the fibrous layer by light pressure, so that less than half the circumference of the veil fibres are coated by resin. In another embodiment the moulding material or structure is provided with a veil on one or both sides of the structure.

The strands which form the scrim preferably have a substantially round cross-section. The diameters of the strands may be in the range of from 100 to 1000 micrometer, preferably 200 to 600 micrometer and more preferably from 300 to 400 micrometer.

An aspect of the disclosure is that the strands of the veil are not fully impregnated by the resin. This aids with the venting of interlaminar air between the prepreg layers. The degree by which the strands of the veil are coated with resin can be expressed by the degree of impregnation (DI). The DI indicates to which degree the circumference of the scrim strands are covered with resin. Therefore, an impregnation index of 1.0 means that the strands are fully impregnated by the resin and an impregnation index of 0.5 indicates, that half of the circumference of the veil fibres are coated by the resin. The disclosure requires that the veil fibres are covered with the prepreg resin to a minimum degree, just sufficient in order that the veil will adhere to the prepreg to assure safe handling. It must not be wholly covered by the resin, however, to 50% of the circumference of the strands or more, to assure the proper provision of air escape channels. Therefore, expressed as a "degree of impregnation", the disclosure requires that the degree of impregnation is between >0 and <0.5 and preferably between 0.2 and 0.3.

To ensure that the ends of the air channels provided by the veil do not become clogged by the prepreg resin, the veil may extend outwardly beyond the edges of the prepreg.

Preferably the scrim should jut out over the edges of the prepreg by 2 to 30, in particular by 10 to 20 mm.

In another embodiment, the veil may be present on one or on both surfaces of the moulding material or structure.

In another embodiment, the veil may be located in the interstices between tows. In an embodiment the veil is arranged on at least the first side of the layer of fibrous reinforcement whereby part of the veil is in the intersticies between tows. The veil in the interstices provides a venting path in the intralaminar and interlaminar directions. This thus provides extraction of any entrapped air or other gaseous matter in the x, y and z direction of the material. This is advantageous when multiple layers of the moulding material form a laminate structure. The fibrous layer may be formed by a process wherein a layer of unidirectional fibrous tows which are fully optionally impregnated with liquid resin is superimposed on a layer of optionally dry unimpregnated unidirectional fibrous tows and the structure consolidated so that the resin penetrates the spaces between the unimpregnated tows but leaves the spaces between the filaments within the tows at least partially unimpregnated. The veil may be inserted between these layers as they are superimposed, such that it located in the interstices.

### Thermoset resin

The thermoset resin ensures that the material has adequate structure at room temperature to allow handling of the material. This is achieved because at room temperature (23 °C), the resin has a relatively high viscosity, typically in the range of from 1000 to 100,000 Pa.s, more typically in the range of from 5000 Pa.s to 500,000 Pa.s. Also, the resin may be tacky. Tack is a measure of the adhesion of a prepreg to a tool surface or to other prepreg plies in an assembly. Tack may be measured in relation to the resin itself or in relation to the prepreg in accordance with the method as disclosed in "Experimental analysis of prepreg tack", Dubois etal, (LaMI)UBP/IFMA, 5 March 2009. This publication discloses that tack can be measured objectively and repeatably by using the equipment as described therein and by measuring the maximum debonding force for a probe which is brought in contact with the resin or prepreg at an initial pressure of 30N at a constant temperature of 30°C and which is subsequently displaced at a rate of 5 mm/min. For these probe contact parameters, the tack F/F_{ref} for the resin is in the range of from 0.1 to 0.6 where F_{ref} = 28.19N and F is the maximum debonding force. For a prepreg, the tack F/F_{ref} is in the range of from 0.1 to 0.45 for F/F_{ref} where F_{ref} = 28.19N and F is the maximum debonding force.. However, a fibrous support web, grid or scrim may also be located on at least one exterior surface of the fibrous reinforcement to further enhance the integrity of the material or structure during handling, storage and processing.

In a further embodiment, the moulding material may comprise unimpregnated tows and at least partially impregnated tows. The partially impregnated fibrous reinforcement may be a unidirectional reinforcement or a woven fibrous reinforcement or a non-woven fibrous reinforcement.

An embodiment of the present disclosure therefore provides a moulding material or structure comprising a layer of unidirectional fibrous reinforcement and a curable liquid resin wherein the fibrous reinforcement comprises a plurality of multifilament tows wherein resin is provided on the first side of the fibrous reinforcement and at least partially penetrates the interstices between the tows of the fibrous reinforcement and leaves the interior of the tows at least partially resin fee.

In a further embodiment the disclosure provides a moulding material or structure comprising a layer of fibrous reinforcement and a curable liquid resin wherein the layer of fibrous reinforcement comprises a plurality of unidirectional multifilament tows wherein resin is provided on a first side of the layer of fibrous reinforcement and wherein the intersticies between the tows are at least partially impregnated with the resin and the resin no more than partially penetrates the interior of the individual tows and the second side of the layer of fibrous reinforcement is at least partially resin free.

In a further embodiment the disclosure provides a stack of such moulding materials or structures.

The moulding material or structure of the disclosure may be specified by its resin content and/or its fiber volume and resin volume and/or its degree of impregnation as measured by the water up take test.

Resin and fibre content of uncured moulding materials or structures are determined in accordance with ISO 11667 (method A) for moulding materials or structures which contain fibrous material which does not comprise unidirectional carbon. Resin and fibre content of uncured moulding materials or structures which contain unidirectional carbon fibrous material are determined in accordance with DIN EN 2559 A (code A). Resin and fibre content of cured moulding materials or structures which contain carbon fibrous material are determined in accordance with DIN EN 2564 A.

The fibre and resin volume% of a prepreg moulding material or structure can be determined from the weight% of fibre and resin by dividing the weight% by the respective density of the resin and carbon fiber.

The % of impregnation of a tow or fibrous material which is impregnated with resin is measured by means of a water pick up test.

The water pick up test is conducted as follows. Six strips of prepreg are cut of size 100 (+/-2) mm x 100 (+/-2) mm. Any backing sheet material is removed. The samples are weighed near the nearest 0.001 g (W1). The strips are located between PTFE backed aluminium plates so that 15 mm of the prepreg strip protrudes from the assembly of PTFE backed plates on one end and whereby the fiber orientation of the prepreg is extends along the protruding part. A clamp is placed on the opposite end, and 5 mm of the protruding part is immersed in water having a temperature of 23 °C, relative air humidity of 50% +/- 35%, and at an ambient temperature of 23 °C. After 5 minutes of immersion the sample is removed from the water and any exterior water is removed with blotting paper. The sample is then weighed again W2. The percentage of water uptake WPU(%) is then calculated by averaging the measured weights for the six samples as follows: WPU(%)=[(<W2>-<W1>)/<W1>)x100. The WPU(%) is indicative of the Degree of Resin Impregnation (DRI).

Water pick up values for the uncured prepreg moulding material and tows of the disclosure may be in the range of from 1 to 90%, 5 to 85%, 10 to 80%, 15 to 75%, 15 to 70%, 15 to 60%, 15 to 50%, 15 to 40%, 15 to 35%, 15 to 30%, 20 to 30%, 25 to 30% and/or combinations of the aforesaid ranges.

Typically, the values for the resin content by weight for the uncured prepreg of the disclosure are in the ranges of from 15 to 70% by weight of the prepreg, from 18 to 68% by weight of the prepreg, from 20 to 65 % by weight of the prepreg, from 25 to 60% by weight of the prepreg, from 25 to 55% by weight of the prepreg, from 25 to 50% by weight of the prepreg, from 25 to 45% by weight of the prepreg, from 25 to 40% by weight of the prepreg, from 25 to 35% by weight of the prepreg, from 25 to 30% by weight of the prepreg, from 30 to 55% by weight of the prepreg, from 35 to 50% by weight of the prepreg and/or combinations of the aforesaid ranges.

Finally, the values for the resin content by volume for the uncured prepreg tows of the disclosure are in the ranges of from 15 to 70% by volume of the prepreg tow, from 18 to 68% by volume of the prepreg tow, from 20 to 65 % by volume of the prepreg tow, from 25 to 60% by volume of the prepreg tow, from 25 to 55% by volume of the prepreg tow, from 25 to 50% by volume of the prepreg tow, from 25 to 45% by volume of the prepreg tow, from 25 to 40% by volume of the prepreg tow, from 25 to 35% by volume of the prepreg tow, from 25 to 30% by volume of the prepreg tow, from 30 to 55% by volume of the prepreg tow, from 35 to 50% by volume of the prepreg tow and/or combinations of the aforesaid ranges. The values for the resin content by weight for the uncured prepreg tows of the invention are in the ranges of from 15 to 70% by weight of the prepreg tow, from 18 to 68% by weight of the prepreg tow, from 20 to 65 % by weight of the prepreg tow, from 25 to 60% by weight of the prepreg tow, from 25 to 55% by weight of the prepreg tow, from 25 to 50% by weight of the prepreg tow, from 25 to 45% by weight of the prepreg tow, from 25 to 40% by weight of the prepreg tow, from 25 to 35% by weight of the prepreg tow, from 25 to 30% by weight of the prepreg tow, from 30 to 55% by weight of the prepreg tow, from 35 to 50% by weight of the prepreg tow and/or combinations of the aforesaid ranges

The term prepreg or semipreg is used herein to describe a moulding material or structure in which the fibrous material has been impregnated with the liquid resin to the desired degree and the liquid resin is substantially uncured.

The tows employed in the present disclosure are made up of a plurality of individual filaments. There may be many thousands of individual filaments in a single tow. The tow and the filaments within the tow are generally unidirectional with the individual filaments aligned substantially parallel. In a preferred embodiment the tows within the moulding material or structure of the disclosure are substantially parallel to each other and extend along the direction of travel employed for the processing of the structure. Typically the number of filaments in a tow can range from 2,500 to 10,000 to 50,000 or greater. Tows of about 25,000 carbon filaments are available from Toray and tows of about 50,000 carbon filaments are available from Zoltek.

The prepregs of this disclosure may be produced from normally available epoxy resins which may contain a hardener and optionally an accelerator. In a preferred embodiment the epoxy resin is free of a traditional hardener such as dicyandiamide and in particular we have found that these desirable prepregs can be obtained by use of a urea based or urea derived curing agent in the absence of a hardener such as dicyandiamide. The relative amount of the curing agent and the epoxy resin that should be used will depend upon the reactivity of the resin and the nature and quantity of the fibrous reinforcement in the prepreg. Typically from 0.5 to 10 wt % of the urea based or urea derived curing agent based on the weight of epoxy resin is used.

The laminates produced from the prepregs of this disclosure can contain less than 3 % by volume of voids, or less than 1 % by volume of voids, typically less than 0.5 % by volume and particularly less than 0.1 % by volume based on the total volume of the laminate as measured by microscopic analysis of 20 spaced cross sections measuring 30 x 40 mm in cross section (spacing 5 cm) of a cured sample of the laminate. The cross section is polished and analysed under a microscope over a viewing angle of 4.5 to 3.5 mm to determine the surface area of the voids in relation to the total surface area of each cross section of the sample and these measurements are averaged for the number of cross sections. This method for determining the void fraction is used within the context of this application, although alternative, standardized methods are available such as DIN EN 2564. These methods are however expected to provide comparative results in relation to the microscopic analysis as outlined here. Also, the maximum size of the voids is assessed in each viewing angle section and this number is averaged over the 20 samples. The average surface area of the voids is taken as the value of the void content by volume.

The prepregs of this disclosure are typically used at a different location from where they are manufactured and they therefore require handleability. It is therefore preferred that they are dry or as dry as possible and have low surface tack. It is therefore preferred to use high viscosity liquid curable resins. The invention has the additional added benefit that the prepregs have improved storage stability when compared with fully impregnated prepregs.

The prepreg is preferably provided with one or more backing sheets to facilitate handling of the material and/or rolling up of the material. The backing sheet may comprise a polyolefin based material such as polyethylene, polypropylene and/or copolymers thereof. The backing sheet may comprise embossing. This has the advantage of providing the prepreg with an air venting surface structure. The air venting surface structure comprising embossed channels which allow air to escape during processing. This is particularly useful as this prevents interply entrapment as interply air is effectively removed via the air venting surface channels.

The prepregs of this disclosure are intended to be laid-up with other composite materials (e.g. other prepregs which may also be according to this disclosure or they may be other prepregs) to produce a curable laminate or a prepreg stack. The prepreg is typically produced as a roll of prepreg and in view of the tacky nature of such materials, a backing sheet is generally provided to enable the roll to be unfurled at the point of use. Thus, preferably the prepreg according to the disclosure comprises a backing sheet on an external face.

The prepregs of this disclosure are produced by impregnating the fibrous material with the epoxy resin. The viscosity of the resin and the conditions employed for impregnation are selected to enable the desired degree of impregnation. It is preferred that during impregnation the resin has a viscosity of from 0.1 Pa.s to 100 Pa.s, preferably from 6 to 100 Pa.s, more preferably from 18 to 80 Pa.s and even more preferably from 20 to 50 Pa.s. In order to increase the rate of impregnation, the process may be carried out at an elevated temperature so that the viscosity of the resin in reduced. However it must not be so hot for a sufficient length of time that premature curing of the resin occurs. Thus, the impregnation process is preferably carried out at temperatures in the range of from 40°C to 110°C more preferably 60°C to 80°C. It is preferred that the resin content of the prepregs is such that after curing the structure contains from 30 to 40 wt %, preferably 31 to 37 wt % more preferably 32 to 35 wt % of the resin. The relative amount of resin and multifilament tow, the impregnation line speed the viscosity of the resin and the density of the multifilament tows should be correlated to achieve the desired degree of impregnation between the tows and to leave spaces between the individual filaments within the tows which are unoccupied by the resin.

The resin can be spread onto the external surface of a roller and coated onto a paper or other backing material to produce a layer of curable resin. The resin composition can then be brought into contact with the multifilament tows for impregnation perhaps by the passage through rollers. The resin may be present on one or two sheets of backing material, which are brought into contact with one or both sides of the tows and consolidated such as by passing them through heated consolidation rollers to cause the desired degree of impregnation. Alternatively, the resin may be applied via a resin bath by conducting the tows through the resin (direct fibre impregnation). The resin may also comprise a solvent which is evaporated following impregnation of the fibre tows.

In the impregnation processes the resin can be maintained in liquid form in a resin bath either being a resin that is liquid at ambient temperature or being molten if it is a resin that is solid or semi-solid at ambient temperature. The liquid resin can then be applied to a backing employing a doctor blade to produce a resin film on a release layer such as paper or polyethylene film. The fibre tows may then be placed into the resin and optionally a second resin layer may be provided on top of the fibre tows and then consolidated.

A backing sheet can be applied either before or after impregnation of the resin. However, it is typically applied before or during impregnation as it can provide a non-stick surface upon which to apply the pressure required for causing the resin to impregnate the fibrous layer.

The epoxy resin used in the preparation of the prepreg preferably has an Epoxy Equivalent Weight (EEW) in the range from 150 to 1500 preferably a high reactivity such as an EEW in the range of from 200 to 500 and the resin composition comprises the resin and an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

The epoxy resin composition preferably also comprises one or more urea based curing agents and it is preferred to use from 0.5 to 10 wt % based on the weight of the epoxy resin of a curing agent, more preferably 1 to 8 wt %, more preferably 2 to 8 wt %. Preferred urea based materials are the range of materials available under the commercial name Urone®. In addition to a curing agent, a suitable accelerator such as a latent amine-based curing agent, such as dicyanopolyamide (DICY).

Accordingly, the present disclosure provides a prepreg moulding material for manufacturing a fibre-reinforced composite material, the prepreg comprising a layer of fibrous reinforcement fully impregnated by a matrix resin material, wherein the resin material has a storage modulus G' of from 3 x 10⁵ Pa to 1 x 10⁸ Pa and a loss modulus G" of from 2 x 10⁶ Pa to 1 x10⁸Pa.

Preferably, the resin material has a storage modulus G' of from 1 x 10⁶ Pa to 1 x 10⁷ Pa, more preferably from 2 x 10⁶ Pa to 4 x 10⁶ Pa.

Preferably, the resin material has a loss modulus G" of from 5 x 10⁶ Pa to 1 x 10⁷ Pa, more preferably from 7 x 10⁶ Pa to 9 x 10⁶ Pa.

Preferably, the resin material has a complex viscosity of from 5 x 10⁵ Pa to 1 x 10⁷ Pa.s, more preferably from 7.5 x 10⁵ Pa to 5 x 10⁶ Pa.s.

Preferably, the resin material has a complex viscosity of from 1 x 10⁶ Pa to 2 x 10⁶ Pa.s. more preferably from 5 to 30 Pa.s at 80 ° C. Preferably, the resin material has a viscosity of from 10 to 25 Pa.s at 80 °C. Preferably, the resin material is an epoxy resin.

We have discovered that the aforesaid storage modulus and loss modulus properties allow the air venting structure to remain in place during handling, storage and lay up of the prepreg moulding material or structure up to the start of processing when the laminate stack is heated up to temperatures over 40 °C and a vacuum pressure is applied, even if multiple plies (stacks of 20, 30, 40, 60 or even more plies) are laid up.

Preferably, the prepreg moulding material is elongate in a longitudinal direction thereof and the fibrous reinforcement is unidirectional along the longitudinal direction of the prepreg.

Preferably, the opposed major surfaces of the prepreg moulding material or structure are embossed with an array of channels therein.

The behaviour of thermosetting pre-preg materials is highly viscoelastic at the typical lay-up temperatures used. The elastic solid portion stores deformation energy as recoverable elastic potential, whereas a viscous liquid flows irreversibly under the action of external forces.

This complex viscosity is obtained using a rheometer to apply an oscillation experiment. From this the complex modulus G* is derived as the complex oscillation which is applied to the material is known (Principles of Polymerization, John Wiley & Sons, New York, 1981).

In viscoelastic materials the stress and strain will be out of phase by an angle delta. The individual contributions making the complex viscosity are defined as G' (Storage Modulus) = G* x cos (delta); G" (Loss Modulus) = G* x sin(delta). This relationship is shown in Figure 8 of WO 2009/118536.

G* is the complex modulus. G' relates to how elastic the material is and defines its stiffness. G" relates to how viscous a material is and defines the damping, and liquid non recoverable flow response of the material.

For a purely elastic solid (glassy or rubbery), G" =0 and the phase angle delta is 0°, and for a purely viscous liquid, G'=0 and the phase angle delta is 90°.

The loss modulus G" indicates the irreversible flow behaviour and a material with a high loss modulus G" is also desirable to prevent the early creep-like flow and maintain an open air path for longer. Therefore the resin used in the prepregs of the present disclosure has a high storage modulus and a high loss modulus, and correspondingly a high complex modulus, at a temperature corresponding to a typical lay-up temperature, such as room temperature (20 °C).

The resin material preferably has a phase angle delta such that the value of delta increases by at least 25 °C over a temperature range of from 10 to 25 °C. Optionally, the value of the phase angle delta increases by a value of from 25 to 70° C over a temperature range of from 10 to 25 °C. Optionally, the value of the phase angle delta between the complex modulus G* and the storage modulus G' increases by a value of from 35 to 65 °C over a temperature range of from 10 to 25 °C. Optionally, the value of the phase angle delta is no more than 70 °C and/or at least 50 degrees at at least a value of within the temperature range of from 12.5 to 25 °C.

In this specification, the viscoelastic properties, i.e. the storage modulus, loss modulus and complex viscosity, of the resin used in the prepregs of the present disclosure were measured at application temperature (i.e. a lay-up temperature of 20 °C) by using a TA Instruments AR2000 rheometer with disposable 25mm diameter aluminium plates. The measurements were carried out with the following settings: an oscillation test at decreasing temperature reducing from 40 °C down to -10 °C at 2 °C /mm with a controlled displacement of 1 x 10⁻⁴ rads at a frequency of 1 Hz and a gap of 1000 micrometer.

Typically, the stiffness of the viscoelastic prepreg is characterised by the resin exhibiting a high elastic rheological response. The resin rheology is characterised by a storage modulus G' of the resin, preferably between 3 x 10 ⁵ Pa and 1 x 10 ⁸ Pa at 20 °C, more preferably from 1 x 10 ⁶ Pa to 1 x 10 ⁷ Pa, yet more preferably from 2 x 10 ⁶ Pa to 4 x 10 ⁶ Pa. The higher the storage modulus at room temperature, the greater the air transport properties of the prepreg stack. However, the upper limit of the storage modulus is limited because otherwise the prepreg would become too rigid and would develop a tendency to snap as the prepreg is being laminated even onto the gentle curvature typical in a wind turbine spar.

In the manufacture of a structural member in the form of a spar or beam using the prepreg moulding material or structure of the present disclosure, preferably the resin has a high loss modulus G" between 2 x 10 ⁶ Pa and 1 x 10 ⁸ Pa at 20 °C, more preferably from 5 x 10⁶ Pa to 1 x 10 ⁷ Pa, yet more preferably from 7 x 10 ⁶ Pa to 9 x 10⁶ Pa.

The resin material preferably has a high complex viscosity at 20 °C of from 5 x 10⁵ Pa to 1 x 10⁷ Pa.s, more preferably from 7.5 x 10 ⁵ Pa to 5 x 10 ⁶ Pa.s, yet more preferably from 1 x 10 ⁶ Pa to 2 x 10 ⁶ Pa.s.

Furthermore, as stated above the viscosity of the resin in the moulding material is relatively high. This provides that prior to the curing stage, which is typically carried out an elevated temperature, for example at a temperature greater than 75 °C, a typical curing temperature being 80 °C or higher, the resin exhibits low or even negligible flow properties. The resin material preferably has a viscosity of from 5 to 30 Pa.s at 80 °C, more preferably from 10 to 25 Pa.s at 80 °C. V In this specification, the resin flow viscosity during the cure cycle was measured using a TA Instruments AR2000 rheometer with disposable 25mm diameter aluminium plates. The measurement was carried out with the following settings: increasing temperature from 30 to 130 °C 2 °C /mm with a shear stress of 3.259Pa, gap: 1000 micrometer.

### Reinforcement

The multifilament tows used in fibrous reinfocement may comprise cracked (i.e. stretch-broken), selectively discontinuous or continuous filaments. The filaments may be made from a wide variety of materials, such as carbon, basaltic fibre, graphite, glass, metalized polymers, aramid and mixtures thereof. Glass and carbon fibres tows are preferred carbon fibre tows, being preferred for wind turbine shells of length above 40 metres such as from 50 to 60 metres. The structural fibres are individual tows made up of a multiplicity of unidirectional individual fibres. Typically the fibres will have a circular or almost circular cross-section with a diameter for carbon in the range of from 3 to 20 µm, preferably from 5 to 12 µm. For other fibres, including glass, the diameter may be in the range of from 3 to 600 µm, preferably from 10 to 100 µm. Different tows may be used in different prepregs according to the disclosure and different prepregs may be used together to produce a cured laminate according to the properties required of the cured laminate. The reinforcing fibers may be synthetic or natural fibers or any other form of material or combination of materials that, combined with the resin composition of the disclosure, forms a composite product. The reinforcement web can either be provided via spools of fiber that are unwound or from a roll of textile. Exemplary fibers include glass, carbon, graphite, boron, ceramic and aramid. Preferred fibers are carbon and glass fibers. Hybrid or mixed fiber systems may also be envisaged. The use of cracked (i.e. stretch-broken) or selectively discontinuous fibers may be advantageous to facilitate lay-up of the product according to the disclosure and improve its capability of being shaped. Although a unidirectional fiber alignment is preferable, other forms may also be used. Typical textile forms include simple textile fabrics, knit fabrics, twill fabrics and satin weaves. It is also possible to envisage using non-woven or non-crimped fiber layers. The surface mass of fibers within the fibrous reinforcement is generally 80-4000 g/m², preferably 100-2500 g/m², and especially preferably 150-2000 g/m². The number of carbon filaments per tow can vary from 3000 to 320,000, again preferably from 6,000 to 160,000 and most preferably from 12,000 to 48,000. For fiberglass reinforcements, fibers of 600-2400 tex are particularly adapted.

Exemplary layers of unidirectional fibrous tows are made from HexTow® carbon fibres, which are available from Hexcel Corporation. Suitable HexTow® carbon fibres for use in making unidirectional fibre tows include: IM7 carbon fibres, which are available as tows that contain 6,000 or 12,000 filaments and weight 0.223 g/m and 0.446 g/m respectively; IM8-IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

A stack of prepregs for preparing cured laminates may contain more than 40 prepreg layers, typically more than 60 layers and at times more than 80 layers, some or all of which may be prepregs according to the present disclosure. One or more of the prepreg layers in the stack may be cured or precured to part process the resin in the prepreg layer. It is however preferred that all the prepregs are according to the disclosure. Typically the stack will have a thickness of from 1 cm. to 10 cm, preferably from 2 cm to 8 cm, more preferably from 3 to 6 cm.

### Additives

Epoxy resins can become brittle upon curing and toughening materials further to the veil of the disclosure can be included with the resin to impart additional durability although they may result in an undesirable increase in the viscosity of the resin.

Where the additional toughening material is a polymer it should be insoluble in the matrix epoxy resin at room temperature and at the elevated temperatures at which the resin is cured. Depending upon the melting point of the thermoplastic polymer, it may melt or soften to varying degrees during curing of the resin at elevated temperatures and re-solidify as the cured laminate is cooled. Suitable thermoplastics should not dissolve in the resin, and include thermoplastics, such as polyamides (PAS), polyethersulfone (PES) and polyetherimide (PEI). Polyamides such as nylon 6 (PA6) and nylon 12 (PA12) and mixtures thereof are preferred.

### Processing

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould and cured.

Once prepared, the prepreg or prepreg stack is cured by exposure to an elevated temperature, and optionally elevated pressure, to produce a cured laminate. As discussed above, the prepregs of the present disclosure can provide excellent mechanical properties without requiring the high pressures encountered in an autoclave process.

Thus, in further aspect, the disclosure relates to a process of curing the thermosetting resin within a prepreg or prepreg stack as described herein, the process involving exposing the prepreg or prepreg stack to a temperature sufficient to induce curing of the thermosetting resin composition and is preferably carried out at a pressure of less than 3.0 bar absolute.

The curing process may be carried out at a pressure of less than 2.0 bar absolute, preferably less than 1 bar absolute. In a particularly preferred embodiment the pressure is less than atmospheric pressure. The curing process may be carried out at one or more temperatures in the range of from 80 to 200°C, for a time sufficient to cure of the thermosetting resin composition to the desired degree.

Curing at a pressure close to atmospheric pressure can be achieved by the so-called vacuum bag technique. This involves placing the prepreg or prepreg stack in an air-tight bag and creating a vacuum on the inside of the bag. This has the effect that the prepreg stack experiences a consolidation pressure of up to atmospheric pressure, depending on the degree of vacuum applied.

Once cured, the prepreg or prepreg stack becomes a composite laminate, suitable for use in a structural application, for example an aerospace structure or a wind turbine blade.

Such composite laminates can comprise structural fibres at a level of from 45% to 75% by volume (fiber volume fraction), preferably from 55 % to 70 % by volume, more preferably from 58 % to 65 % by volume (DIN EN 2564 A).

The unique properties of the lightweight layers such as woven and non-woven fibrous layers, and other similar structured thermoplastic polymer layers, used in this disclosure make it possible to cure the laminates using such layers in an out-of-autoclave process. This relatively low pressure and low cost curing process can be used because the damage tolerance (e.g. Compression After Impact - CAI) of the cured laminate is not substantially less than the damage tolerance achieved using the higher pressure and higher expense of an autoclave. In contrast, out-of-autoclave curing of laminates that have interleaf zones toughened with insoluble thermoplastic particles produces cured laminates that have damage tolerances that are significantly reduced.

The invention has applicability in the production of a wide variety of materials. One particular use is in the production of wind turbine blades and spars. Typical wind turbine blades comprise two long shells which come together to form the outer surface of the blade and a supporting spar within the blade and which extends at least partially along the length of the blade. The shells and the spar may be produced by curing the prepregs or stacks of prepregs of the present disclosure.

The length and shape of the shells vary but the trend is to use longer blades (requiring longer shells) which in turn can require thicker shells and a special sequence of prepregs within the stack to be cured. This imposes special requirements on the materials from which they are prepared. Prepregs based on unidirectional multifilament carbon fibre tows are preferred for blades of length 30 metres or more particularly those of length 40 metres or more such as 45 to 65 metres. The length and shape of the shells may also lead to the use of different prepregs within the stack from which the shells are produced and may also lead to the use of different prepregs along the length of the shell. In view of their size and complexity the preferred process for the manufacture of wind energy components such as shells and spars is to provide the appropriate prepregs within a vacuum bag, which is placed in a mould and heated to the curing temperature. The bag may be evacuated before or after it is placed within the mould.

The reduction in the number of voids in the laminates is particularly useful in providing shells and/or spars and/or spar caps for wind turbine blades having uniform mechanical properties. Particularly spars and parts thereof are subjected to high loads. Any reduction in void content greatly improves the mechanical performance of these parts. This in turn allows the parts to be built at a reduced weight (for example by reducing the number of prepreg layers) in comparison to a similar part which would have a higher void content. Furthermore, in order to withstand the conditions to which wind turbine structures are subjected during use it is desirable that the cured prepregs from which the shells and spars are made have a high Tg and preferably a Tg greater than 90°C.

Examples of embodiments of the disclosure are now described by way of example only.

### Example 1

A curable moulding material in the form of a layers of prepreg was prepared from fibrous reinforcement in the form of unidirectional Panex 35 carbon fiber (as supplied by Zoltek) having an area weight of 600 g/m². The carbon fiber layers were impregnated with M9.6GF thermoset resin as supplied by Hexcel so that each prepreg layer contained 34% by weight of resin.

The water pickup value of the prepreg was 0.3%. This was determined using the following method. Six strips of prepreg were cut of size 100 (+/-2) mm x 100 (+/-2) mm. Any backing sheet material was removed. The samples were weighed near the nearest 0.001 g (W1). The strips were located between PTFE backed aluminium plates so that 15 mm of the prepreg strip protrudes from the assembly of PTFE backed plates on one end and whereby the fiber orientation of the prepreg is extends along the protruding part. A clamp was placed on the opposite end, and 5 mm of the protruding part was immersed in water having a temperature of 23 °C, relative air humidity of 50% +/- 35%, and at an ambient temperature of 23 °C. After 5 minutes of immersion the sample was removed from the water and any exterior water was removed with blotting paper. The sample was then weighed again W2. The percentage of water uptake WPU(%) was then calculated by averaging the measured weights for the six samples as follows: WPU(%)=[(<W2>-<W1>)/<W1>)x100. The WPU(%) is indicative of the Degree of Resin Impregnation (DRI).

Following assembly of the prepreg various surface materials were provided on its surface as follows:
Woven Triaxial 76 dtex polyester scrim as supplied by Bellingroth GmbH & Co. KG
Polyester as supplied by DeVoId ATM, non woven veil of weight 5 g/m²
Polyamide veil (PA 6) as supplied by Protechnic
Phenoxy veil of weight 23g/m² as supplied by EMS-Chemie AG

Samples of 300mm x 300mm were cut from the various prepregs having the different surface materials. These samples were further cut down to a size of 150 x 150 mm. Samples of 150 x 150 mm were also prepared by further cutting prepreg samples of 300 x 300 mm on which no surface material was present.

16 plies of each prepreg were combined to form laminates for each prepreg, all with the carbon tows running in the same direction. For the prepreg layers containing the surface material, the layup configuration was such that the treated surface of one piece of prepreg was laid against the untreated surface of the next piece of prepreg.

The layups were placed inside a vacuum bag and cured under 1 bar pressure using a standard cure cycle of 25-80°C at 1°C/minute, 80°C for 120 minutes, 80-120°C at 1°C/minute and 120°C for 60 minutes.

Following cure, the laminates were then cut into sections, polished and imaged with a microscope (100x). The resulting images were analysed to determine the void area as a percentage of the area examined (% Porosity).

Sections were taken from the central portion of the cured laminates, using a bandsaw. The samples were potted in an acrylic resin and polished using a Buehler polisher. The potted samples were then analysed using a Zeiss Axio Observer Z1M inverted light microscope with a 10x objective with Axiocam MRc camera and Axiovision software to determine the void fraction in accordance with AITM 4-0003. The void fraction is presented in the below Table 1.

**Table 1. Prepreg water pickup value 0.3%.**

| **Experiment** | **Laminate** | **% voids** |
|---|---|---|
| Control laminate | 16 plies M9.6GF/34%/UD600 No scrim / Additive | 1.92 |
| Control laminate | 16 plies M9.6GF/34%/UD600 with woven 76 dtex polyester scrim | 1.64 |
| 5 gsm Polyester veil | 16 plies M9.6GF/34%/UD600 with Polyester veil | 1.75 |
| 4 gsm Polyamide veil | 16 plies M9.6GF/34%/UD600 with Polyamide veil | 1.38 |
| Phenoxy veil | 16 plies M9.6GF/34%/UD600 with Phenoxy veil | 0.32 |

### Example 2

Prepreg samples were also prepared as outlined in Example 1, but in this case the water pickup value of the prepreg was 0.2%.

Laminate samples were again prepared and cured as outlined in Example 1 for this prepreg and the results are shown in Table 2.

**Table 2. Prepreg water pickup value 0.2%.**

| **Experiment** | **Laminate** | **% voids** |
|---|---|---|
| Control laminate | 16 plies M9.6GF/34%/UD600 No scrim / no additive | 1.52 |
| Control laminate | 16 plies M9.6GF/34%/UD600 with woven 76 dtex polyester scrim | 0.86 |
| Phenoxy veil | 16 plies M9.6GF/34%/UD600 with Phenoxy veil | 0.08 |

### Example 3

Prepreg samples were also prepared as outlined in Example 1, but in this case the water pickup value of the prepreg was 0.1%.

Laminate samples were again prepared and cured as outlined in Example 1 for this prepreg and the results are shown in Table 2.

**Table 3. Prepreg water pickup value 0.1%.**

| **Experiment** | **Laminate** | **% voids** |
|---|---|---|
| Control laminate | 16 plies M9.6GF/34%/UD600 No scrim / no additive | 2.8 |
| Control laminate | 16 plies M9.6GF/34%/UD600 with woven 76 dtex polyester scrim | 2.0 |
| 4 gsm polyamide veil | 16 plies M9.6GF/34%/UD600 with PA veil | 1.9 |
| Phenoxy veil, 23 gsm | 16 plies M9.6GF/34%/UD600 with phenoxy veil | 1.3 |
| Control laminate | 35 plies M9.6GF/34%/UD600 No scrim / no additive | 2.9 |
| 4 gsm polyamide veil | 35 plies M9.6GF/34%/UD600 with PA veil | 1.3 |
| Phenoxy veil, 23 gsm | 35 plies M9.6GF/34%/UD600 with phenoxy veil | 0.7 |

Tables 1, 2 and 3 demonstrate that the addition of a phenoxy veil to a prepreg produce a reduction in void content.

### Example 4

Prepreg samples were prepared as outlined in Example 1, and then subject to interlaminar shear strength (ILSS) testing, the results of which are shown in Table 4 ILSS testing was performed according to ISO 14130 wherein the 0° direction was that of the unidirectional fibre direction of the laminate.

**Table 4**

| **Experiment** | **Laminate** | **ILSS (MPa)** |
|---|---|---|
| Control laminate | 16 plies M9.6GF/34%/UD600 No scrim / Additive | 61.2 |
| Control laminate | 16 plies M9.6GF/34%/UD600 with woven 76 dtex polyester scrim | 61.8 |
| 4 gsm Polyamide veil | 16 plies M9.6GF/34%/UD600 with Polyamide veil | 62.1 |
| Phenoxy veil | 16 plies M9.6GF/34%/UD600 with Phenoxy veil | 75.1 |

### Example 5

Prepreg samples were prepared as outlined in Example 1, and then subject to a fracture toughness (G1c) in accordance with ASTM D5528 mode I, the results of which are shown in Table 5

**Table 5**

| **Experiment** | **Laminate** | **G1c (J/m²)** |
|---|---|---|
| Control laminate | 16 plies M9.6GF/34%/UD600 No scrim / Additive | 347 |
| Control laminate | 16 plies M9.6GF/34%/UD600 with woven 76 dtex polyester scrim | 427 |
| 4 gsm Polyamide veil | 16 plies M9.6GF/34%/UD600 with Polyamide veil | 589 |
| Phenoxy veil | 16 plies M9.6GF/34%/UD600 with Phenoxy veil | 568 |

## Claims

1. Use of a non-woven thermoplastic resin fabric in combination with a curable moulding material comprising a fibrous reinforcement material and a thermoset resin material by bringing the thermoplastic resin in contact with the curable moulding material during or following assembly of the moulding material, the thermoplastic resin having a melting point below the gel temperature of the thermoset resin material to reduce the void fraction and increase the interlaminar shear strength (ILSS) and/or fracture toughness (G1c) of a cured moulding manufactured from said moulding material forming a laminate structure in comparison to a cured moulding manufactured from said moulding material in which the non-woven thermoplastic resin fabric is absent when forming the laminate structure.

2. Use according to claim 1, wherein the thermoplastic resin is brought in contact with the moulding material following assembly.

3. Use according to claim 1 or 2, wherein the thermoplastic resin is present in the interstices between tows of the fibrous reinforcement material.

4. Use according to any of the preceding claims, wherein the thermoplastic resin comprises a thermoplastic veil.

5. Use according to claim 4, wherein the thermoplastic veil comprises discrete chopped fibres.

6. Use according to claim 4 or 5, wherein the thermoplastic veil has an areal weight of from 3 to 25 g/m², preferably from 17 to 24 g/m².

7. Use according to any of the preceding claims wherein the thermoplastic veil comprises a phenoxy resin or bisphenol-A-based polyhydroxyether resin or polyhydroxyether resin with an average molecular weight in the range of from 25,000 to 40,000, preferably from 34,000 to 39,000.

8. Use according to any of the preceding claims wherein the thermoplastic veil comprises a phenoxy resin having a melting point in the range of from 120 to 140°C.

9. Use according to any of the preceding claims wherein the moulding material has a water pick-up value between 15% and 30%.

10. Use according to any of the preceding claims wherein the moulding material comprises from 70 % to 60 % of fibrous material and from 30% to 40% of curable liquid resin.

11. Use according to any of the preceding claims, wherein curable resin is provided on a first side of the fibrous reinforcement and at least partially penetrates the interstices between the tows of the fibrous reinforcement to leave the interior of the tows at least partially resin free.

12. Use according to any of the preceding claims wherein a thermoplastic veil is applied to both surfaces of the moulding material.

13. Use according to any of the preceding claims, wherein the layer of fibrous reinforcement is formed from multiple layers comprising multiple tows, the veil being located between the multiple layers.

## Patentansprüche

1. Verwendung eines nichtgewobenen thermoplastischen Harztextilstoffs in Kombination mit einem aushärtbaren Formmaterial umfassend ein faseriges Verstärkungsmaterial und ein Duroplastharzmaterial durch Inkontaktbringen des thermoplastischen Harzes mit dem aushärtbaren Formmaterial während des oder folgend auf das Zusammenbauen des Formmaterials, wobei das thermoplastische Harz einen Schmelzpunkt unterhalb der Geltemperatur des Duroplastharzmaterials aufweist, um den Hohlraumanteil eines ausgehärtet Formteils, der aus dem Formmaterial, das eine Laminatstruktur bildet, hergestellt ist, zu reduzieren und die interlaminare Scherfestigkeit (ILSS) und/oder Bruchzähigkeit (G1c) desselben zu erhöhen im Vergleich mit einem ausgehärten Formteil, der aus dem Formmaterial hergestellt ist, bei dem der nichtgewobene thermoplastische Harztextilstoff abwesend ist, wenn die Laminatstruktur gebildet wird.

2. Verwendung nach Anspruch 1, wobei das thermoplastische Harz auf das Zusammenbauen hin in Kontakt mit dem Formmaterial gebracht wird.

3. Verwendung nach Anspruch 1 oder 2, wobei das thermoplastische Harz in den Zwischenräumen zwischen Spinnenkabeln des faserförmigen Verstärkungsmaterials vorliegt.

4. Verwendung nach irgendeinem der vorhergehenden Ansprüche, wobei das thermoplastische Harz eine thermoplastische Oberflächenmatte umfasst.

5. Verwendung nach Anspruch 4, wobei die thermoplastische Oberflächenmatte einzelne geschnittene Fasern umfasst.

6. Verwendung nach Anspruch 4 oder 5, wobei die thermoplastische Oberflächenmatte ein Flächengewicht von 3 bis 25 g/m², bevorzugt 17 bis 24 g/m² aufweist.

7. Verwendung nach irgendeinem der vorhergehenden Ansprüche, wobei die thermoplastische Oberflächenmatte ein Phenoxyharz oder Polyhydroxyetherharz auf der Basis von Bisphenol A oder Polyhydroxyetherharz mit einem durchschnittlichen Molekulargewicht im Bereich von 25.000 bis 40.000, bevorzugt von 34.000 bis 39.000 umfasst.

8. Verwendung nach irgendeinem der vorhergehenden Ansprüche, wobei die thermoplastische Oberflächenmatte ein Phenoxyharz umfasst, das einen Schmelzpunkt im Bereich von 120 bis 140 °C aufweist.

9. Verwendung nach irgendeinem der vorhergehenden Ansprüche, wobei das Formmaterial einen Wasseraufnahmewert zwischen 15 % und 30 % aufweist.

10. Verwendung nach irgendeinem der vorhergehenden Ansprüche, wobei das Formmaterial 70 % bis 60 % faseriges Material und 30 % bis 40 % aushärtbares flüssiges Harz umfasst.

11. Verwendung nach irgendeinem der vorhergehenden Ansprüche, wobei das aushärtbare Harz auf einer ersten Seite der faserigen Verstärkung bereitgestellt ist und mindestens teilweise in die Zwischenräume zwischen den Spinnkabeln der faserigen Verstärkung eindringt, um das Innere der Spinnkabel mindestens teilweise harzfrei zu lassen.

12. Verwendung nach irgendeinem der vorhergehenden Ansprüche, wobei die thermoplastische Oberflächenmatte auf beide Flächen des Formmaterials aufgebracht wird.

13. Verwendung nach irgendeinem der vorhergehenden Ansprüche, wobei die Schicht faseriger Verstärkung aus mehreren Schichten gebildet ist, die mehrere Spinnenkabel umfassen, wobei die Oberflächenmatte sich zwischen den mehreren Schichten befindet.

## Revendications

1. Utilisation d'un tissu de résine thermoplastique non tissé en combinaison avec un matériau de moulage durcissable comprenant un matériau de renforcement fibreux et un matériau de résine thermodurcissable en mettant la résine thermoplastique en contact avec le matériau de moulage durcissable pendant ou après l'assemblage du matériau de moulage, la résine thermoplastique ayant un point de fusion inférieur à la température de gel du matériau de résine thermodurcissable pour réduire la fraction de vide et augmenter la résistance au cisaillement interlaminaire (ILSS) et/ou la ténacité à la rupture (G1c) d'un moulage durci fabriqué à partir dudit matériau de moulage formant une structure stratifiée par comparaison à un moulage durci fabriqué à partir dudit matériau de moulage dans lequel le tissu de résine thermoplastique non tissé est absent lors du moulage du stratifié.

2. Utilisation selon la revendication 1, la résine thermoplastique étant mise en contact avec le matériau de moulage après assemblage.

3. Utilisation selon la revendication 1 ou 2, la résine thermoplastique étant présente dans les interstices entre les câbles du matériau de renforcement fibreux.

4. Utilisation selon l'une quelconque des revendications précédentes, la résine thermoplastique comprenant un voile thermoplastique.

5. Utilisation selon la revendication 4, le voile thermoplastique comprenant des fibres coupées discrètes.

6. Utilisation selon la revendication 4 ou 5, le voile thermoplastique ayant un poids surfacique de 3 à 25 g/m², de préférence de 17 à 24 g/m².

7. Utilisation selon l'une quelconque des revendications précédentes, le voile thermoplastique comprenant une résine phénoxy ou une résine de polyhydroxyéther à base de bisphénol-A ou une résine de polyhydroxyéther ayant un poids moléculaire moyen compris entre 25 000 et 40 000, de préférence entre 34 000 et 39 000.

8. Utilisation selon l'une quelconque des revendications précédentes, le voile thermoplastique comprenant une résine phénoxy ayant un point de fusion dans la plage de 120 à 140 °C.

9. Utilisation selon l'une quelconque des revendications précédentes, le matériau de moulage ayant une valeur d'absorption d'eau comprise entre 15 % et 30 %.

10. Utilisation selon l'une quelconque des revendications précédentes, le matériau de moulage comprenant de 70 % à 60 % de matériau fibreux et de 30 % à 40 % de résine liquide durcissable.

11. Utilisation selon l'une quelconque des revendications précédentes, une résine durcissable étant prévue sur un premier côté du renforcement fibreux et pénétrant au moins partiellement dans les interstices entre les câbles du renforcement fibreux pour laisser l'intérieur des câbles au moins partiellement sans résine.

12. Utilisation selon l'une quelconque des revendications précédentes, un voile thermoplastique étant appliqué sur les deux surfaces du matériau de moulage.

13. Utilisation selon l'une quelconque des revendications précédentes, la couche de renforcement fibreux étant formée à partir de multiples couches comprenant plusieurs câbles, le voile étant situé entre les multiples couches.
